# FASCICULE DE BREVET EUROPEEN

(11) **EP 0 916 067 B1**
(45) Date de publication et mention de la délivrance du brevet: **17.10.2001**
(21) Numéro de dépôt: 97932883.8
(22) Date de dépôt: 10.07.1997
(51) Int. Cl.: F42B 3/04, B60R 21/26

(54) **GENERATEUR HYBRIDE A INJECTION GAZEUSE INTERNE**
HYBRIDGENERATOR MIT INTERNER GASEINSPRITZUNG
HYBRID GENERATOR WITH INTERNAL GAS INJECTION

(30) Priorité: 09.08.1996 FR 9610045
(43) Date de publication de la demande: 19.05.1999
(73) Titulaire: S.n.c. Livbag, 91710 Vert Le Petit (FR)
(72) Inventeur: PEROTTO, Christian, 91610 Ballancourt (FR); PERUT, Christian, 77310 Saint Fargeau Ponthierry (FR); BILLOU, Eric, 33360 Camblanes et Meynac (FR)
(74) Mandataire: Pech, Bernard
(86) Numéro de dépôt international: FR9701260
(87) Numéro de publication internationale: WO9806998

(56) Documents cités:
- FR-A- 2 137 619
- FR-A- 2 184 370
- US-A- 5 536 040

## Description

La présente invention se rapporte au domaine de la sécurité automobile. Plus précisément l'invention concerne un générateur hybride de gaz contenant un chargement pyrotechnique solide ainsi qu'une réserve de gaz sous pression et destiné à gonfler un coussin de protection pour occupants d'un véhicule automobile.

Les générateurs hybrides qui reposent sur le principe d'une production de gaz actifs par mélange des gaz provenant de la combustion d'un combustible solide ou liquide avec des gaz froids distincts, sont très recherchés en sécurité automobile car ils fournissent des gaz moins chauds qui peuvent plus facilement que les gaz fournis par les générateurs traditionnels à chargement solide, satisfaire aux normes de faible toxicité requises en matière de sécurité automobile.

C'est ainsi que le brevet FR-A-2 184 370 décrit un générateur hybride comportant une chambre de combustion contenant un chargement pyrotechnique et une chambre réservoir contenant un gaz sous pression. La chambre réservoir communique avec un coussin gonflable par l'intermédiaire d'un bouchon pyrotechnique tandis que la séparation entre la chambre de combustion et la chambre réservoir est assurée par une conduite comportant une cloison perforée et un moyen de blocage. Une ligne électro-pyrotechnique complexe initie les différentes fonctions du générateur : allumage du chargement pyrotechnique, ouverture du bouchon pyrotechnique et éventuellement actionnement du moyen de blocage. Un tel générateur est complexe et peu fiable, par ailleurs son chargement pyrotechnique produit souvent des résidus solides.

Dans le même temps une autre solution, consistant à disposer un générateur pyrotechnique de gaz à l'intérieur d'une enceinte de gaz sous pression communiquant avec un coussin gonflable par l'intermédiaire d'un diaphragme fragmentable a été proposée à l'homme de métier. Cette solution qui est, par exemple, décrite dans le brevet FR-A- 2 137 619 est elle aussi d'une mise en oeuvre complexe et donc peu fiable. Par ailleurs les chargements pyrotechniques utilisés dans ce brevet conduisent à la production de résidus solides que l'homme de métier veut aujourd'hui éviter.

Différents autres types de générateurs hybrides ont été proposés à l'homme de métier. Le brevet US-A-3 813 007 ou ses correspondants FR-A-2 116 947 et FR-A-2 116 949 ont proposé un type de générateur hybride comprenant un chargement solide de poudre à double base dont les gaz de combustion sont dilués avec un liquide vaporisable contenu dans un réservoir équipé d'un piston mobile sous l'action de la pression régnant dans le générateur. La structure relativement complexe de ce générateur ainsi que l'utilisation d'un liquide ont fait qu'il n'a pas été retenu par l'homme de métier.

Le brevet US-A-5 199 740 a proposé un générateur de gaz dans lequel les gaz de combustion d'un chargement pyrotechnique solide sont dilués dans une enceinte de gaz inerte sous pression. Un tel générateur est également de structure très complexe.

La demande EP-A-0 685 369 a proposé un générateur hybride dans lequel un mélange gazeux oxydant sous pression est réchauffé par combustion avec un carburant liquide avant d'être dilué dans une enceinte de gaz inerte sous pression. Un tel générateur nécessitant une pluralité de chambres sous pression présente le même type d'inconvénients.

Il a alors été proposé par la demande GB-A-2 294 999 un générateur hybride présentant une réserve de gaz oxydant sous pression qui, en fonctionnement est réchauffé par combustion avec du magnésium et du fer. Ce générateur présente un double inconvénient : il nécessite un système de filtration efficace pour éviter l'introduction de particules métalliques chaudes dans le coussin et, d'autre part, la dite combustion ayant lieu en sortie du générateur, ce dernier envoie des gaz encore relativement chauds dans le coussin gonflable.

Enfin il a également été proposé, par exemple par la demande PCT WO 95/18730 un générateur hybride comportant un chargement pyrotechnique solide dont les gaz de combustion sont dilués avec de l'air ambiant prélevé par un système de trompes aspirantes. Ce système qui parait en théorie très séduisant, n'est, en pratique, pas satisfaisant car, compte tenu des temps de fonctionnement très courts exigés par la sécurité automobile, il ne permet pas d'aspirer une grande quantité d'air ambiant et les gaz qui gonflent le coussin sont, pour l'essentiel, les gaz chauds provenant de la combustion du chargement pyrotechnique.

L'homme de métier ne dispose donc pas à l'heure actuelle d'un générateur hybride de structure simple et peu coûteuse qui fonctionne de manière satisfaisante.

L'objet de la présente invention est précisément de proposer un tel générateur.

L'invention concerne donc un générateur hybride de gaz, destiné notamment à gonfler un coussin de protection, comprenant une enceinte étanche aux gaz qui contient une chambre réservoir remplie par un gaz sous pression ainsi qu'une chambre de combustion et de mélange dans laquelle sont disposées un dispositif d'allumage et un chargement pyrotechnique solide, et entièrement combustible, la dite enceinte présentant au niveau de la dite chambre de combustion et de mélange au moins un orifice de décharge fermé par un opercule claquable, la dite chambre réservoir et la dite chambre de combustion et de mélange étant séparées l'une de l'autre par une cloison qui est interne à la dite enceinte et qui est munie d'au moins une ouverture permettant, après rupture de l'opercule fermant l'orifice de décharge, l'évacuation du gaz contenu dans la dite chambre réservoir en un temps sensiblement égal à la durée de combustion du chargement pyrotechnique, caractérisé en ce que :
i) la dite enceinte est constituée par un boîtier cylindrique comportant une paroi latérale et un fond et étant fermé par une bague de fermeture sertie dans l'extrémité libre du dit boîtier,
ii) la dite bague de fermeture présente un orifice circulaire central prolongé par un col cylindrique creux dans lequel est inséré le dispositif d'allumage,
iii) le dit chargement pyrotechnique brûle sans produire de résidus solides.

En cas de collision, un signal électrique va provoquer la mise à feu du dispositif d'allumage qui va amorcer la combustion du chargement pyrotechnique. L'élévation de la pression qui en résulte à l'intérieur de la chambre de combustion et de mélange va provoquer la rupture de l'opercule claquable qui ferme l'orifice de décharge. A partir de ce moment là le gaz sous pression contenu dans la chambre réservoir va s'écouler, au travers des ouvertures portées par la cloison interne, dans la chambre de combustion et de mélange pour se mélanger aux gaz chauds produits par la combustion du chargement pyrotechnique. Le mélange ainsi constitué quitte le générateur hybride par l'orifice de décharge.

Les ouvertures portées par la cloison interne doivent être calibrées pour permettre la vidange de la chambre réservoir dans un temps sensiblement égal à celui de la combustion du chargement pyrotechnique. Ces ouvertures peuvent, à l'état initial, être libres et dans ce cas la pression à l'intérieur de la chambre réservoir sera égale à la pression régnant dans la chambre de combustion et de mélange ou elles peuvent être fermées par des opercules claquables.

Le chargement pyrotechnique entièrement combustible doit brûler sans produire de résidus solides si l'on veut que le générateur hybride selon l'invention ne comporte pas de dispositif de filtration. Ce chargement pyrotechnique peut être constitué par un propergol équilibré en oxydant et en réducteur, auquel cas les gaz sous pression contenus dans la chambre réservoir serviront uniquement de diluant et seront avantageusement constitués par des gaz inertes comme l'azote, l'argon ou l'hélium.

Toutefois, selon un mode préféré de réalisation de l'invention, le dit chargement pyrotechnique est un chargement produisant par combustion des gaz réducteurs, le gaz sous pression dans la chambre réservoir étant dans ce cas un gaz oxydant qui brûlera avec les dits gaz réducteurs.

Comme gaz oxydant on utilisera avantageusement de l'air sous pression ou des mélanges argon/oxygène.

Une famille de chargements pyrotechniques entièrement combustibles et produisant des gaz réducteurs est par exemple constituée par les compositions contenant un liant polyuréthanne à base de polybutadiène hydroxytéléchélique et de l'octogène comme oxydant.

Selon une réalisation particulièrement préférée de l'invention le chargement pyrotechnique solide sera un chargement ablatable organique. On dit d'un chargement pyrotechnique qu'il est "ablatable" lorsqu'il ne peut brûler qu'avec un rapport extérieur d'oxydant. Ce chargement pyrotechnique ablatable organique sera principalement constitué par un matériau choisi dans le groupe constitué par l'amino-5 tétrazole, le diamino triazole, la trihydrazinotriazine, les polyuréthannes de polyazotures de glycidyle, les polyuréthannes de polybutadiènes hydroxytéléchéliques et les polycarbonates.

Comme il a été indiqué plus haut la dite enceinte est constituée par un boîtier cylindrique comportant une paroi latérale et un fond, le dit boîtier étant fermé par une bague de fermeture sertie dans l'extrémité libre du dit boîtier. La bague de fermeture présente un orifice circulaire central prolongé par un col cylindrique creux dans lequel est inséré le dit dispositif d'allumage. Dans ce cas la dite cloison interne est avantageusement constituée par un disque présentant un col axial cylindrique creux orienté vers le dit dispositif d'allumage. La cloison interne définit ainsi avec la bague de fermeture les limites de la chambre de mélange et de combustion, la chambre réservoir étant située entre la cloison interne et le fond du boîtier cylindrique.

Le chargement pyrotechnique est inséré et éventuellement collé dans le col creux porté par la dite cloison interne. Avantageusement ce chargement pyrotechnique est un chargement annulaire présentant un canal central et la cloison interne présente au moins une ouverture centrale débouchant dans le canal du chargement pyrotechnique.

Lorsque le chargement annulaire sera un chargement ablatable, la cloison interne ne présentera préférentiellement que cette ouverture centrale de manière à garantir que tout le gaz contenu dans la chambre réservoir passe bien sur le chargement ablatable. Dans le cas où le chargement ablatable présente une pluralité de canaux, la cloison interne présentera une ouverture en regard de chaque canal.

Les générateurs hybrides selon l'invention présentent la série d'avantages suivants :
- ils fournissent des gaz exempts de toute particule solide et non toxiques,
- ils sont constitués par un petit nombre de pièces très simples et sont donc peu onéreux,
- ils permettent, par le choix du chargement solide et du gaz sous pression, d'avoir accès à une gamme très large de température en sortie du générateur.

Par ailleurs lorsqu'un chargement solide ablatable est utilisé, ces générateurs ne comportent qu'un seul élément pyrotechnique sensible : le dispositif d'allumage.

Les générateurs selon l'invention conviennent bien pour gonfler des coussins de protection pour conducteurs ou passagers de véhicules automobiles.

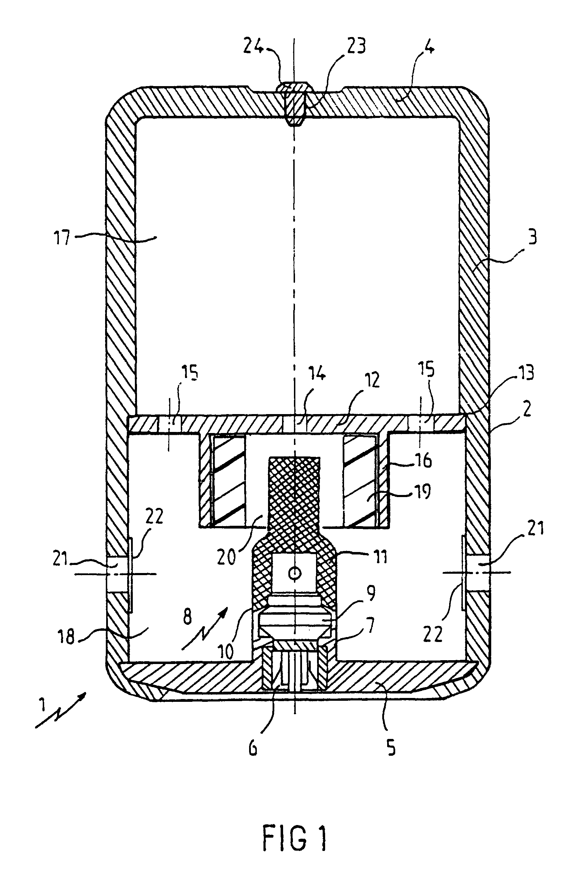

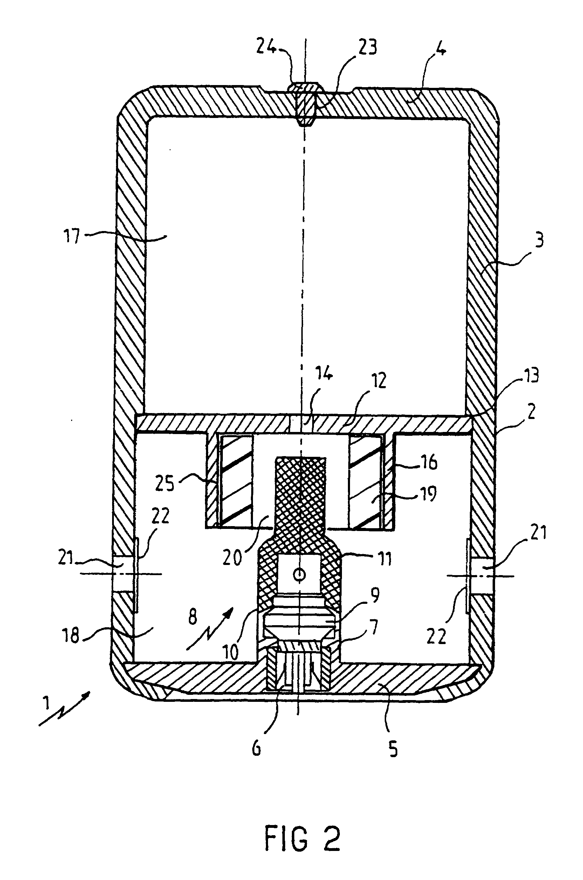

On décrit maintenant en détails une réalisation préférée de l'invention en se référant aux figures 1 et 2.

La figure 1 représente, vue en coupe, un premier générateur selon l'invention.

La figure 2 représente, vue en coupe, un second générateur selon l'invention.

Le générateur 1 représenté à la figure 1 est constitué par un boîtier cylindrique 2 comportant une paroi latérale 3 et un fond 4 ne formant qu'une seule et même pièce. Le boîtier 2 est fermé par une bague de fermeture 5 sertie dans l'extrémité libre du dit boiter. Le boîtier 2 et la bague 5 constituent une enceinte étanche aux gaz. Cette enceinte doit résister à des pressions élevées, supérieures à 30 MPa, voire 60 MPa, et ses pièces constitutives seront réalisées en acier. La dite bague de fermeture 5 présente un orifice central 6 bordé par un col cylindrique creux 7 interne au générateur 1 et dans lequel est inséré un dispositif d'allumage 8 constitué par un inflammateur électrique 9 entouré d'un capuchon métallique fragmentable 10 entièrement rempli par une poudre d'allumage 11. Un cloison interne 12 en forme de disque sépare l'intérieur du générateur 1 en deux chambres internes distinctes. Cette cloison interne 12 prend appui sur un épaulement interne 13 présenté par la surface latérale interne du boîtier 2 et est soudée à cette dernière, par exemple par bombardement électronique. La cloison 12 est une pièce support qui doit résister à des pressions et à des températures élevées pouvant atteindre ou dépasser 2000°K.

La cloison 12 présente une ouverture centrale 14 et des ouvertures périphériques 15, ces ouvertures n'étant pas fermées par des opercules. La cloison 12 supporte également un col axial cylindrique creux 16 orienté vers le dispositif d'allumage. Ce col doit également résister à des températures et à des pressions élevées ; avantageusement, comme représenté sur la figure 1, il ne constituera avec la cloison 12 qu'une seule et même pièce métallique.

La cloison 12 sépare ainsi l'intérieur du générateur 1 en deux chambres distinctes, une chambre réservoir 17 limitée par le fond 4 et par la cloison 12 et une chambre de combustion et de mélange 18 limitée par la cloison 12 et par la bague de fermeture 5. Un bloc 19 de chargement pyrotechnique entièrement combustible est inséré dans le col 16 porté par la cloison interne 12.

Ce bloc de chargement 19 est un bloc annulaire présentant un canal central 20 situé en regard de l'ouverture centrale 14 présentée par la cloison interne 12.

Pour constituer ce chargement 19, on pourra avantageusement utiliser une composition répondant à la formulation suivante :

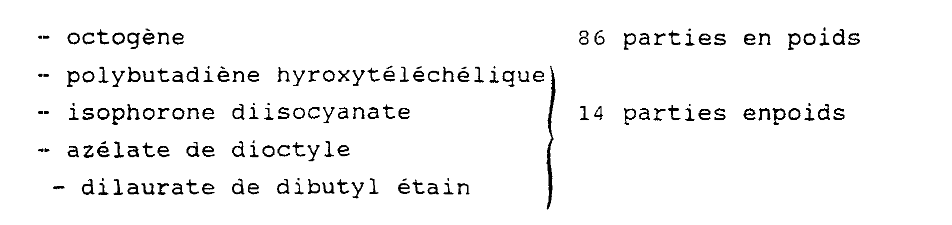

Sur la paroi latérale de la chambre de combustion et: de mélange 18 sont ménagés des orifices de décharge 21 disposés relativement près de la bague de fermeture 5, donc relativement loin du bloc 19 de chargement combustible. Ces orifices de décharge 21 sont fermés par des opercules 22 tarés pour se briser sous une pression prédéterminée.

La chambre réservoir 17 est remplie par un gaz sous pression, par exemple par de l'air sous 30 MPa. Il faut observer que comme les ouvertures 14 et 15 portées par la cloison interne 12 sont ouvertes, c'est tout le volume intérieur du générateur 1 qui se trouve à cette pression. Pour permettre le remplissage du générateur 1 par le gaz sous pression, le fond 4 présente un orifice axial 23 qui est fermé, après remplissage, par un bouchon de soudure 24.

Le fonctionnement de ce générateur est le suivant. En cas de collision, un signal électrique initie l'inflammateur 9 qui met à feu la poudre d'allumage 11. Les gaz de combustion de cette dernière provoquent l'éclatement du capuchon 10 et allument le chargement pyrotechnique 19. La montée en pression qui en résulte dans la chambre 1 provoquent l'éclatement des opercules 22 et les gaz commencent à sortir par les orifices de décharge 21. Les gaz contenus dans la chambre réservoir 17 quittent alors cette dernière par les orifices 14 et 15 en réagissant, le cas échéant, avec les gaz de combustion du chargement 19 et en les diluant.

On a représenté à la figure 2 un générateur 101 analogue au générateur 1, les éléments identiques portant sur la figure 2 les mêmes repères que sur la figure 1. Dans le générateur 101, la cloison 12 ne porte qu'une ouverture central 14, assurant ainsi le passage de la totalité des gaz contenus dans la chambre réservoir 17 sur le bloc de chargement 19. Cette réalisation est préconisé lorsque le chargement 19 est un chargement ablatable. On peut également observer que dans le cas du générateur 101 le bloc de chargement 19 est revêtu d'une couche externe 25 d'inhibiteur qui permet le collage du chargement 19 à l'intérieur du col 16 porté par la cloison interne 12.

## Revendications

1. Générateur hybride de gaz (1), destiné notamment à gonfler un coussin de protection, comprenant une enceinte (2,5) étanche aux gaz qui contient une chambre réservoir (17) remplie par un gaz sous pression ainsi qu'une chambre de combustion et de mélange (18) dans laquelle sont disposées un dispositif d'allumage (8) et un chargement pyrotechnique (19) solide, et entièrement combustible, la dite enceinte présentant au niveau de la dite chambre de combustion et de mélange au moins un orifice de décharge (21) fermé par un opercule claquable (22), la dite chambre réservoir (17) et la dite chambre de combustion et de mélange (18) étant séparées l'une de l'autre par une cloison (12) qui est interne à la dite enceinte (2,5) et qui est munie d'au moins une ouverture (14) permettant, après rupture de l'opercule (22) fermant l'orifice de décharge (21), l'évacuation du gaz contenu dans la dite chambre réservoir en un temps sensiblement égal à la durée de combustion du chargement pyrotechnique (19), **caractérisé en ce que** :
i) la dite enceinte (2,5) est constituée par un boîtier cylindrique (2) comportant une paroi latérale (3) et un fond (4) et étant fermé par une bague de fermeture (5) sertie dans l'extrémité libre du dit boîtier;
ii) la dite bague de fermeture (5) présente un orifice circulaire central (6) prolongé par un col cylindrique creux (7) dans lequel est inséré le dispositif d'allumage (8),
iii) le dit chargement pyrotechnique (19) brûle sans produire de résidus solides.

2. Générateur hybride selon la revendication 1 **caractérisé en ce que** le dit gaz sous pression est un gaz oxydant et **en ce que** le dit chargement pyrotechnique (19) produit par combustion des gaz réducteurs.

3. Générateur hybride selon la revendication 2 **caractérisé en ce que** le dit chargement pyrotechnique (19) est un chargement ablatable organique.

4. Générateur hybride selon la revendication 3 **caractérisé en ce que** le dit chargement pyrotechnique ablatable organique est principalement constitué par un matériau choisi dans le groupe constitué par l'amino-5 tétrazole, le diamino triazole, la trihydrazinotriazine, les polyuréthannes de polyazotures de glycidyle, les polyuréthannes de polybutadiènes hydroxytéléchéliques et les polycarbonates.

5. Générateur hybride selon la revendication 1 **caractérisé en ce que** la dite cloison interne est constituée par un disque présentant un col axial cylindrique creux (16) orienté vers le dit dispositif d'allumage.

6. Générateur hybride selon la revendication 5 **caractérisé en ce que** le dit chargement pyrotechnique (19) est inséré dans le dit col creux (16) porté par la dite cloison (12).

7. Générateur hybride selon la revendication 6 **caractérisé en ce que** le dit chargement pyrotechnique (19) est un chargement annulaire présentant un canal central (20) et **en ce que** la dite cloison présente au moins une ouverture centrale (14).

## Patentansprüche

1. Hybrider Gasgenerator (1), insbesondere zum Aufblasen eines Airbags, mit einem gasdichten Raum (2, 5), der eine mit einem unter Druck stehenden Gas gefüllte Reservekammer (17) sowie eine Brenn- und Mischkammer (18) aufweist, in der eine Zündvorrichtung (8) und eine feste und vollständig brennbare pyrotechnische Ladung (19) angeordnet sind, wobei der Raum in Höhe der Brenn- und Mischkammer mindestens eine Entladungsöffnung (21) aufweist, die von einer durchschlagbaren Abdeckung (22) verschlossen wird, wobei die Reservekammer (17) und die Brenn- und Mischkammer (18) voneinander durch eine Trennwand (12) getrennt werden, die innerhalb des Raums (2, 5) liegt und die mit mindestens einer Öffnung (14) versehen ist, die nach dem Zerreißen der die Entladungsöffnung (21) verschließenden Abdeckung (22) den Austritt des in der Reservekammer enthaltenen Gases in einem Zeitraum ermöglicht, der im wesentlichen gleich der Brenndauer der pyrotechnischen Ladung (19) ist, **dadurch gekennzeichnet, daß**
i) der Raum (2, 5) aus einem zylindrischen Gehäuse (2) besteht, das eine Seitenwand (3) und einen Boden (4) aufweist und von einem Schließring (5) verschlossen wird, der in das freie Ende des Gehäuses eingeklemmt ist;
ii) der Schließring (5) eine zentrale kreisförmige Öffnung (6) aufweist, die von einem hohlen zylindrischen Hals (7) verlängert wird, in den die Zündvorrichtung (8) eingefügt ist;
iii) die pyrotechnische Ladung ohne Erzeugung fester Rückstände verbrennt.

2. Hybrider Generator nach Anspruch 1, **dadurch gekennzeichnet, daß** das unter Druck stehende Gas ein oxidierendes Gas ist und daß die pyrotechnische Ladung (19) durch Verbrennung reduzierende Gase erzeugt.

3. Hybrider Generator nach Anspruch 2, **dadurch gekennzeichnet, daß** die pyrotechnische Ladung (19) eine organische, abbrennbare Ladung ist.

4. Hybrider Generator nach Anspruch 3, **dadurch gekennzeichnet, daß** die organische, abbrennbare Ladung hauptsächlich aus einem Material besteht, das aus der Gruppe ausgewählt wird, die von Amino-5-tetrazol, Diamino-triazol, Trihydrazino-triazin, Polyurethanen von Glycidylazidpolymeren, Polyurethanen von hydroxytelechelischen Polybutadienen und Polycarbonaten gebildet wird.

5. Hybrider Generator nach Anspruch 1, **dadurch gekennzeichnet, daß** die innere Trennwand aus einer Scheibe besteht, die einen axialen, hohlen, zylindrischen Hals (16) aufweist, der zur Zündvorrichtung hin ausgerichtet ist.

6. Hybrider Generator nach Anspruch 5, **dadurch gekennzeichnet, daß** die pyrotechnische Ladung (19) in den von der Trennwand (12) getragenen hohlen Hals (16) eingeführt ist.

7. Hybrider Generator nach Anspruch 6, **dadurch gekennzeichnet, daß** die pyrotechnische Ladung (19) eine ringförmige Ladung mit einem zentralen Kanal (20) ist, und daß die Trennwand mindestens eine zentrale Öffnung (14) aufweist.

## Claims

1. Hybrid gas generator (1), designed in particular for inflating a protective cushion, comprising a gastight enclosure (2.5) which contains a reservoir chamber (17) filled with a gas under pressure as well as a combustion and mixing chamber (18) in which an ignition device (8) and a solid and entirely combustible pyrotechnic charge (19) are disposed, the said chamber having, in the region of the said combustion and mixing chamber, at least one discharge orifice (21) closed by a burstable cap (22), the said reservoir chamber (17) and the said combustion and mixing chamber (18) being separated from each other by a partition (12) which is inside the said enclosure (2.5) and which is provided with at least one opening (14) permitting, after the cap (22) closing the discharge orifice (21) is ruptured, the gas contained in the said reservoir chamber to escape in a time substantially equal to the duration of combustion of the pyrotechnic charge (19), **characterized in that**:
i) the said enclosure (2.5) consists of a cylindrical case (2) having a lateral wall (3) and a bottom (4) and being closed by a closing ring (5) crimped into the free end of the said case,
ii) the said closing ring (5) has a central circular orifice (6) extended by a hollow cylindrical neck (7) in which the ignition device (8) is inserted,
iii) the said pyrotechnic charge (19) burns without producing solid residues.

2. Hybrid generator according to claim 1, **characterized in that** the said gas under pressure is an oxidizing gas and **in that** the said pyrotechnic charge (19) produces reducing gases by combustion.

3. Hybrid generator according to claim 2, **characterized in that** the said pyrotechnic charge (19) is an organic ablatable charge.

4. Hybrid generator according to claim 3, **characterized in that** the said organic ablatable pyrotechnic charge mainly consists of a material chosen from the group consisting of amino-5 tetrazole, diaminotriazole, trihydrazinotriazine, polyurethanes of glycidyl polyazides, polyurethanes of hydroxytelechelic polybutadienes and polycarbonates.

5. Hybrid generator according to claim 1, **characterized in that** the said internal partition consists of a disc having a hollow cylindrical axial neck (16) directed towards the said ignition device.

6. Hybrid generator according to claim 5, **characterized in that** the said pyrotechnic charge (19) is inserted in the hollow neck (16) carried by the said partition (12).

7. Hybrid generator according to claim 6, **characterized in that** the said pyrotechnic charge (19) is an annular charge having a central channel (20) and **in that** the said partition has at least one central opening (14).
